# EUROPÄISCHE PATENTSCHRIFT

(11) **EP 4 037 126 B1**
(45) Veröffentlichungstag und Bekanntmachung des Hinweises auf die Patenterteilung: **21.01.2026**
(21) Anmeldenummer: 21162844.1
(22) Anmeldetag: 16.03.2021
(51) Int. Cl.: H02J 1/08, H02J 1/06, B61L 19/06, B61L 27/70

(54) **SYSTEM ZUM KONTROLLIERTEN SCHNELLSTART UND BETRIEB EINES ZUR AUSFALLSICHEREN VERSORGUNG EINES ELEKTRISCHEN VERBRAUCHERS VORGESEHENEN REDUNDANT AUSGEFÜHRTEN ENERGIEBUSSES**
SYSTEM FOR THE CONTROLLED RAPID START AND OPERATION OF A REDUNDANTLY DESIGNED POWER BUS FOR FAIL-SAFE SUPPLY OF AN ELECTRICAL CONSUMER
SYSTÈME DE DÉMARRAGE RAPIDE COMMANDÉ ET DE FONCTIONNEMENT D'UN BUS À ÉNERGIE REDONDANT DESTINÉ À L'ALIMENTATION À SÉCURITÉ INTÉGRÉE D'UN CONSOMMATEUR ÉLECTRIQUE

(30) Priorität: 29.01.2021 EP 21154365
(43) Veröffentlichungstag der Anmeldung: 03.08.2022
(73) Patentinhaber: Siemens Mobility AG, 8304 Wallisellen (CH)
(72) Erfinder: HEDIGER, Martin, 8700 Küsnacht (CH)
(74) Vertreter: Siemens Patent Attorneys

(56) Entgegenhaltungen:
- EP-B1- 3 142 238
- EP-B1- 3 247 015
- EP-B1- 3 415 399
- US-A- 5 027 002
- US-B1- 6 735 704
- US-B2- 7 012 421

## Beschreibung

Die vorliegende Erfindung bezieht sich auf ein System zum kontrollierten Schnellstart und Betrieb eines zur ausfallsicheren Versorgung eines elektrischen Verbrauchers vorgesehenen redundant ausgeführten Energiebusses.

Elektrische Verbraucher, wie dezentrale Funktionseinheiten im schienengebundenen Verkehr, werden im Besonderen in Schienenverkehrsnetzwerken eingesetzt, wo diese genutzt werden, um Fahrzeug beeinflussende und/oder Fahrzeug überwachende Einheiten zu steuern und bezüglich der Funktionalität zu überwachen und um Prozessdaten aufzunehmen und zurück an eine zentrale Steuerungs- und/oder Überwachungszentrale, wie zum Beispiel eine Leitstelle oder ein Stellwerk, zu melden. Als zugbeeinflussende Einheiten, die also Anweisungen an den Fahrzeugführer geben oder sogar direkt Eingriffe in der Fahrzeugsteuerung vornehmen oder direkt einen sicheren Fahrweg einstellen, können beispielsweise Signale, Weichen, Balisen, Linienleiter, Gleismagnete und dergleichen sowie auch Sensoren zum Erfassen von Prozessgrössen des fahrenden Zuges, wie Leistungsaufnahme, Geschwindigkeit und dergleichen, betrachtet werden. Als Zug- und Gleisabschnitt überwachende Einheiten können ebenfalls Balisen und Linienleiter, aber auch Achszähler und Gleisstromkreise und andere Gleisfreimeldesysteme genannt werden. Grundsätzlich betrifft die vorliegende Erfindung aber alle industriellen Anlagen, in denen funktionale Einheiten über grössere Strecken verteilt sind und dennoch zentral gesteuert werden müssen. Die zentrale Steuerung kann dabei von einer ortsfesten Leitstelle, aber auch durch eine nicht-ortsfeste virtuelle Leitstelle wahrgenommen werden.

Aus dem Projekt Sinet^{®} der Siemens Mobility AG, Wallisellen, Schweiz, und der dazu korrespondierenden europäischen Patentanmeldung EP 2 301 202 A1 sind eine Einrichtung und ein Verfahren zur Steuerung und/oder Überwachung von entlang eines Verkehrsnetzwerks angeordneten dezentralen Funktionseinheiten bekannt, welche folgenden Kernpunkte umfassen:
a) ein übergeordnetes Steuerungssystem, das mit den dezentralen Funktionseinheiten mittels Datentelegrammen Informationen austauscht,
b) ein Datentransportnetzwerk mit einer Anzahl von Netzzugangspunkten, wobei das übergeordnete Steuerungssystem über mindestens einen Netzzugangspunkt an dem Datentransportnetzwerk angekoppelt ist;
c) Kommunikationseinheiten, die jeweils an einem Netzzugangspunkt angeschlossen sind, wobei:
d) die dezentralen Funktionseinheiten zu Untergruppen mit jeweils eigenem Subnetzwerk zusammengefasst sind; und wobei
e) das Subnetzwerk jeder der Untergruppen an jedem seiner beiden Ende jeweils über eine Kommunikationseinheit und über einem Netzzugangspunkt an dem Datentransportnetzwerk angekoppelt ist.

Auf diese Weise kann für die Ankopplung der dezentralen Funktionseinheiten ein digitales Datentransportnetzwerk genutzt werden, welches in jeder Weise robust gegen ein einfaches Fehlerereignis ist, dennoch eine sehr geschickte Verwendung von sehr breit in der Bahntechnik eingesetzten Cu-Kabeln, zum Beispiel bisher vorhandenen Stellwerkskabeln, erlaubt und schliesslich auch nur eine vergleichsweise geringe Zahl von Netzzugangspunkten benötigt.

Eine derartige Einrichtung ist dabei in besonders vorteilhafter Weise für ein Schienennetz für den Eisenbahnverkehr einsetzbar. Folglich ist dann zweckmässig, mittels den dezentralen Funktionseinheiten verkehrsüberwachende und verkehrssteuernde Funktionseinheiten, wie insbesondere Signale, Weichen, Achszähler, Gleisstromkreise, punkt- und linienförmige Zugbeeinflussungselemente, an das Datentransportnetzwerk anzukoppeln.

Der Aufbau von technischen Anlagen, besonders auch in der Bahninfrastruktur, ist aufgrund der über 100 jährigen Geschichte des Industrieanlagenbaus und des Eisenbahnwesens auf Robustheit und Zuverlässigkeit ausgelegt. In der damaligen Konzeption wurden besonders die Aussenelemente der Bahnsicherungsanlagen über relativ kräftige Kabeladern angeschlossen, um die Schaltzustände über die definierten Distanzen sicher detektieren zu können, d.h. die Auslegung erfolgt entsprechend der Spitzenbelastungen mit ausreichender Reserve. Mit dem Schaltvorgang der Aussenelemente wird über die Energiezuführung auch die Information übermittelt. Daraus folgt aber in naheliegender Weise auch, dass die möglichen Distanzen durch den detektierbaren Energiefluss begrenzt sind. Unter heutigen Flexibilitäts-, Kosten- und ressourcenpolitischen Aspekten sind diese etablierten Konzepte neben der durch die EP 2 301 202 A1 offenbarten Kommunikationsstruktur dringend auch im Bereich der Energiezuführung zu innovieren und so die bisherige Kopplung von Information und Energie aufzulösen.

Zur Lösung einer dezentralen Energieversorgung der dezentralen Funktionseinheiten offenbart die internationalen Patentanmeldung WO 2013/013908 A1 eine Lösung im Rahmen des Produkts Sigrid^{®} der Siemens Mobility AG, Schweiz. Diese Lösung sieht eine Einrichtung und ein Verfahren zum Betreiben von in einer industriellen Anlage angeordneten dezentralen Funktionseinheiten vor, umfassend:
a) ein übergeordnetes Steuerungssystem, das mit den dezentralen Funktionseinheiten mittels Datentelegrammen Informationen austauscht,
b) ein Datentransportnetzwerk mit einer Anzahl von Netzzugangspunkten, wobei das übergeordnete Steuerungssystem über mindestens einen Netzzugangspunkt an dem Datentransportnetzwerk angekoppelt ist;
c) Kommunikationseinheiten, die an einem Netzzugangspunkt angeschlossen sind und den dezentralen Funktionseinheiten den Zugang zu dem Datentransportnetzwerk bereitstellen, und
d) ein Energietransportnetz, an das die dezentralen Funktionseinheiten angeschlossen sind und das die dezentralen Funktionseinheiten mit elektrischer Energie versorgt. Auf diese Weise ist nun auch das Energietransportnetz vollkommen von einem Stellwerk entkoppelt.

Ausgehend von der heutigen Stellwerkarchitektur mit dezentralen Stationen, aber Punkt-zu-Punkt-Energiezuführung, wird hiermit ein neuer, innovativer Ansatz beschritten. Die heutigen kabel- und arbeitsintensiven Punkt- zu Punkt-Verbindungen für die Stromversorgung bzw. die Energieversorgung der peripheren Elemente entlang dem Gleis (Element Controller oder auch dezentrale Funktionseinheit genannt) werden ersetzt durch adernsparende und einfach zu montierende Bus- oder Ringleitungen.

Die in der WO 2013/013908 A1 offenbarte Lösung beschränkt sich aber längst nicht nur auf den beschriebenen Anwendungsfall der Stellwerksarchitektur von Bahnanlagen, sondern geht weit darüber hinaus. Als zukünftige Beispiele werden das Energiemanagement für Gebäude oder für Grossanlagen in der produzierenden oder verarbeitenden Industrie auf der Basis dezentraler Energieversorgung gesehen.

Wenn der Energiebus zwischen zwei Stellwerken oder sonstigen Einrichtungen mit Anschluss zu den Energieversorgungsnetzen verlegt wird, so kann die Versorgung der angeschlossenen Verbraucher (dezentrale Funktionseinheiten) von beiden Speiseseiten erfolgen. Dadurch wird eine bisher noch nicht verfügbare Redundanz der Energieversorgung geschaffen. Die dezentralen Funktionseinheiten - auch Element Controller oder kurz EC genannt) werden dabei durch Netzknoteneinheiten - auch Buskoppler oder kurz SND - Smart Node Device genannt - an den Datenbus und den Energiebus angeschlossen, die Steuerungs-, Überwachungs- und Diagnosefunktionen übernehmen können. Die SND können beispielsweise den Energiebus unterbrechen bzw. durchschalten, sowie Ströme und Spannungen im Energiebus messen.

Einfache Defekte, also beispielsweise Kurzschlüsse oder Unterbrüche, im Energiebus führen bei korrekter Behandlung aufgrund der Redundanz nicht unmittelbar zu einem Ausfall von Elementen. Im Fall einer ausfallenden Speiseseite würde die Versorgung aller dezentralen Funktionselemente von der zweiten Speiseseite übernommen. Ein Verfahren und System zur entsprechende Behandlung und Unterbindung von Kurzschlüssen des Energiebusses sind aus der europäischen Patentanmeldung EP 3 109 128 A1 bekannt. Zentral sind hierbei die Steuerungsmechanismen und die Netzknoteneinheiten, die den Energiebus im Fehlerfall selektiv zu jeder der beiden Einkopplungsseiten auftrennen können.

Zur Wahrnehmung ihrer Aufgabe verfügen die Netzknoteneinheiten über eine Rechnereinheit, die in der Regel auf ein Betriebssystem, wie Windows oder dergleichen, gestützt ist. Beim einem Ausfall des Energiebusses oder bei einem Neustart kann der Energiebus daher erst dann wieder korrekt in Betrieb genommen werden, wenn **u.a.** auch die Kurzschlussüberwachung in Netzknoteneinheiten ihren Betrieb aufgenommen hat, also wenn die Logikprogramme inkl. Betriebssystem entsprechend aufgestartet worden. Da in dem Energiebus mehrere Netzknoteneinheiten perlenkettenartig nacheinander aufgereiht sind, die die Zeit, die eine Netzknoteneinheit zum Aufstarten benötigt von grosser Wichtigkeit. Im vorstehend genannten Produkt Sigrid^{®} können zwischen den beiden Einspeisepunkten maximal 16 Netzknoteneinheiten angeordnet werden, was aber bei einer übergangsweise nur einseitigen Einspeisung heissen kann, dass erst der Neustart aller 16 Netzknoteneinheiten abgewartet werden muss, bis der Energiebus wieder ordnungsgemäss aufgestartet worden ist. Selbst bei einer angenommenen Aufstartzeitdauer von 30 Sekunden pro Netzknoteneinheit benötigt der Neustart des Energiebusses etwa 8 Minuten, bis die Spannung des Energiebusses auch an die letzte der 16 Netzknoteneinheiten durchgeschaltet worden ist, da ein Durchschalten des Energiebusses erst dann zur nächstliegend in der Kette angeordneten Netzknoteneinheit erfolgt, wenn die zuvor angeordnete Netzknoteneinheit korrekt in Betrieb gegangen und ihre elementaren Busprüfungsfunktionen, wie z.B. Spannungsmessung und Ermittlung allfälliger Fehlerströme, erfolgreich abgeschliessen konnte.

Im Interesse des Bahnbetreibers ist es aber natürlich, dass der Energiebus nach einem Neustart oder bei Störungen möglichst schnell wieder hochgefahren werden kann.

Der vorliegenden Erfindung liegt daher die Aufgabe zugrunde, ein System zum kontrollierten Schnellstart und Betrieb eines zur ausfallsicheren Versorgung eines elektrischen Verbrauchers vorgesehenen redundant ausgeführten Energiebusses anzugeben, bei dem der Neustart des Energiebusses in vergleichsweise kurzer Zeit ausgeführt werden kann und trotzdem sichergestellt ist, dass die notwendigen elementaren Busprüfungen erfolgreich abgeschlossen werden können.

Diese Aufgabe wird erfindungsgemäss durch ein System zum kontrollierten Schnellstart und Betrieb eines zur ausfallsicheren Versorgung eines elektrischen Verbrauchers vorgesehenen redundant ausgeführten Energiebusses, über den in einer industriellen Anlage, insbesondere einer bahntechnischen Anlage, angeordnete dezentrale als elektrische Verbraucher charakterisierbare Funktionseinheiten mit elektrischer Energie versorgbar sind, wobei:
a) eine Anzahl von Netzknoteneinheiten sequentiell zwischen zwei Speisepunkten eines ringartig aufgebauten Energiebusses angeordnet sind, die den dezentralen Funktionseinheiten den Zugang zu dem Energiebus und optional auch zu einem Datenbus (CB) bereitstellen,
b) mindestens eine erste dieser Anzahl von Netzknoteneinheiten über ein steuerbares Schaltmodul verfügt, das einen ersten Schalter, einen zweiten Schalter und einen dritten Schalter umfasst, wobei mit dem ersten und dem zweiten Schalter ein elektrischer Versorgungszugang zu den beiden Speisepunkten und mit dem dritten Schalter ein elektrischer Versorgungszugang zu der dezentralen Funktionseinheit schaltbar ist, wobei
c)die erste dieser Anzahl von Netzknoteneinheiten eine betriebssystemgestützte Rechnereinheit und ein betriebssystemlose Logikeinheit aufweist,
d) die betriebssystemlose Logikeinheit ertüchtigt ist, während des Aufstartens der betriebssystemgestützten Rechnereinheit und/oder während einer Betriebsstörung der betriebssystemgestützten Rechnereinheit eine elementare Prüfung des Energiebusses und eine Steuerung zumindest des ersten und des zweiten Schalters in Abhängigkeit von dem Ergebnis der elementaren Prüfung des Energiebusses vorzunehmen, und
e) die betriebssystemgestützte Rechnereinheit nach einem erfolgreichen Aufstarten und/oder bei einer ordnungsgemässen Funktion ihres Dienstprogramms die drei Schalter anstelle der betriebssystemlosen Logikeinheit steuert.

Auf diese Weise kann ein Schnellstart des Energiebusses vorgenommen, weil die betriebssystemlose Logikeinheit mit Anliegen der Spannung des Energiebusses die elementare Prüfung sofort vornehmen kann. Eine hierzu geeignete Logikeinheit ist beispielsweise ein FPGA, das die Prüfung der Busspannung und das Vorhandensein von Fehlerströme, wie z.B**.** auch Kurzschlussströme, sicher und schnell detektieren kann. Ist diese elementare Prüfung aber erfolgreich abgeschlossen, kann die Busspannung durch entsprechende Steuerung des ersten und zweiten Schalter zu der im Energiebus nächstliegend angeordneten Netzknoteneinheit bereits vorgenommen werden, während die Rechnereinheit noch mit dem Hochfahren des Betriebssystem beschäftigt ist und daher die korrekte Steuerung des Schaltmoduls noch nicht ausführen kann. Auf diese Weise wird eine erhebliche Zeiteinsparung beim Aufstarten des Energiebusses erzielt.

Wie schon oben ausgeführt, kann die betriebssystemlose Logikeinheit ertüchtigt ist, nach erfolgreichem Abschluss der elementaren Prüfung des Energiebusses die Spannung des Energiebusses zu der im Energiebus nächstliegend angeordneten Netzknoteneinheit durchzuschalten. Somit werden der erste und der zweite Schalter durch diese Logikeinheit gesteuert, in der Regel deutlich bevor beispielsweise bei einem Neustart des Energiebusses die betriebssystemgestützte Rechnereinheit aufgestartet worden ist.

Sinnvollerweise kann die elementare Prüfung des Energiebusses eine Prüfung der an der Netzknoteneinheit anliegenden Spannung und/oder eine Prüfung auf Fehlerströme, wie z.B. einen Kurzschlussstrom, umfassen.

Für die korrekte Funktion des Energiebusses mit der Ausführung des vollständigen Programms der Rechnereinheit ist es zweckmässig, wenn die betriebssystemgestützte Rechnereinheit (CPU) nach einem erfolgreichen Aufstarten und/oder bei einer ordnungsgemässen Funktion ihres Dienstprogramms die betriebssystemlose Logikeinheit von ihrer Energieversorgung bzw. von ihren Steuerzugängen zu dem ersten und dem zweiten Schalter abtrennt.

Weitere vorteilhafte Ausgestaltungen der vorliegenden Erfindung sind den übrigen Unteransprüchen zu entnehmen.

Vorteilhafte Ausführungsbeispiele der vorliegenden Erfindung werden anhand der Zeichnung näher erläutert. Dabei zeigen:
- Figur 1: in schematischer Ansicht eine Stellwerkarchitektur mit einem Datenbus und einem Energiebus; und
- Figur 2: in schematischer Ansicht eine Netzknoteneinheit zur Verbindung einer dezentralen Funktionseinheit mit dem Datenbus und Energiebus.

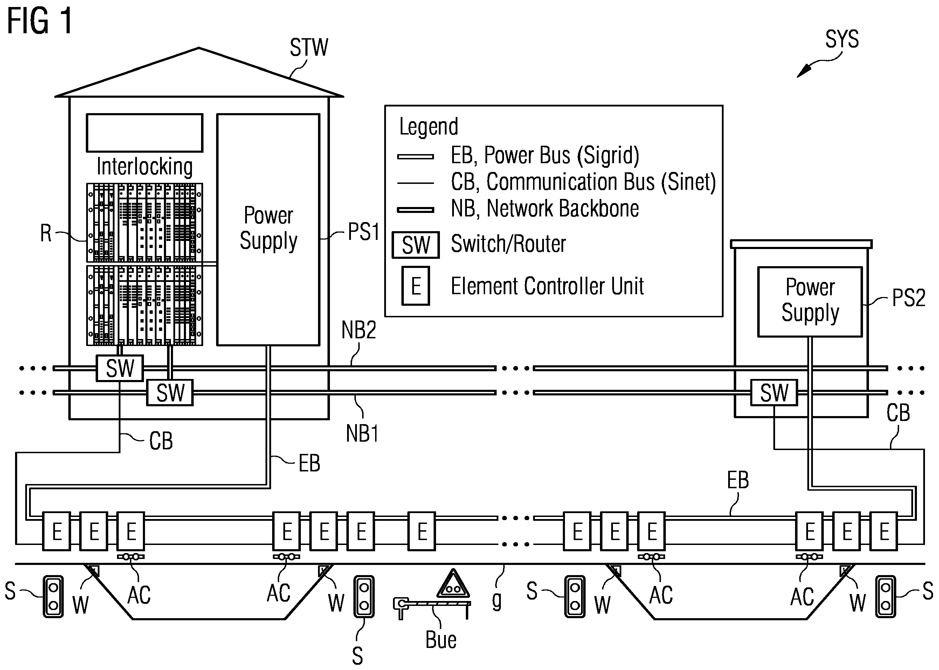

Figur 1 zeigt schematisch eine Stellwerkarchitektur mit einem System Sys, das u.a. ein Stellwerk STW, einen redunant aufgebauten Datenbackbone NB1, NB2, einen Datenbus CB und einen Energiebus EB mit zwei Speisestellen PS1 und PS2 aufweist. Das Stellwerk STW steuert einen Zugverkehr auf einem Gleisabschnitt G, in welchem Signale S, Weichen W, ein Bahnübergang Bue und Achszähler AC angeordnet sind. Diese Zugsicherungs- und Zugbeeinflussungskomponenten koppeln jeweils mit einer dezentralen Funktionseinheit - auch Element Controller Unit E genannt - an dem Datenbus CB und dem Energiebus EB an. Die dezentralen Funktionseinheiten E sind dabei so an den ringförmigen Datenbus CB angeschlossen, dass über jede Seite des ringförmigen Datenbusses CB entweder der Zugriff auf den Datenbackbone NB1 bzw. NB2 gegeben ist. Der Datenbus CB koppelt dabei mit entsprechenden Routern/Switches SW an dem jeweiligen Datenbackbone NB1, NB2 an. Zudem gewährleistet der sequentielle Anschluss der Element Controller Unit E an dem ringförmigen Energiebus, dass jede Element Controller Unit E von beiden Seiten her und damit redundant mit elektrischer Energie versorgt werden kann.

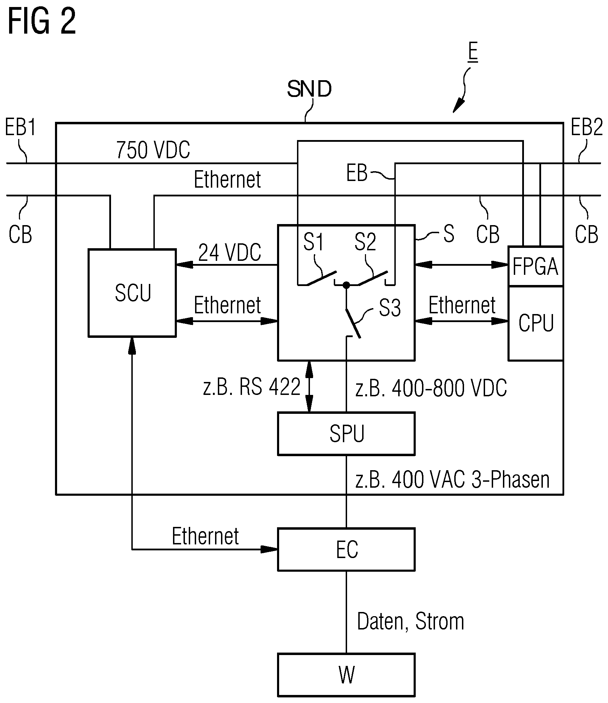

Figur 2 zeigt nun schematisch die daten- und energieversorungstechnische Anschaltung der Element Controller Unit E einer Zugbeeinflussungskomponente, hier zum Beispiel einer Weiche W, an den Datenbus CB und den Energiebus EB. Ein derartiger Anschaltpunkt umfasst eine Netzknoteneinheit SND und den eigentlichen Element Controller EC. Die Netzknoteneinheit SND umfasst eine Kommunikationseinheit SCU zum Datenaustausch über beide Äste des Datenbusses CB. Energieseitig ist die Netzknoteneinheit SND so ausgestaltet, dass sie an beiden Ästen EB1, EB2 des Energiebusses EB ankoppelt und damit immer, ggfs. über andere Netzknoteneinheiten SND hinweg - ein Zugang zu beiden Einspeisepunkten PS1 und PS2 besteht (wie in Figur 1 gezeigt).

Die Netzknoteneinheit SND verfügt weiter über eine betriebssystemgestützte Rechnereinheit CPU, die ein Schaltmodul S steuert und zugleich auch den Zustand des an der Netzknoteneinheit anliegenden Energiebusses EB überwacht. Im Besonderen detektiert die Rechnereinheit CPU Stromüberschreitungen und/oder Spannungseinbrüche innerhalb des Energiebusses EB und/oder beim angeschlossenen Verbraucher (SPU mit EC) und wertet diese Daten auf einen möglicherweise vorliegenden Kurzschluss aus.

Somit wird die Netzknoteneinheit SND immer in redundanter Weise von zwei Seiten her mit elektrischer Energie versorgt und verfügt daher im Rahmen des Schaltmoduls S über einen linken Schalter S1 und einen rechten Schalter S2 sowie über einen Lastschalter S3 zur Versorgungseinheit SPU des Element Controllers EC.

Die Netzknoteneinheit SND versorgt auch die Kommunikationseinheit SCU mit Spannung und kann mit dieser auch über eine Ethernet-Verbindung Daten austauschen und ist damit in den Datenbus CB eingebunden (z.B. Aktivieren des Handbetriebs der Netzknoteneinheit SND über Fernzugriff und Betätigen der Schalter S1 bis S3, Abgabe von Diagnosedaten an das Stellwerk STW oder ein übergeordnetes Service- und Diagnosesytem, Abfrage der aktuellen Spannungen, Ströme, Energie- und Leistungswerte, Parametrierung der Netzknoteneinheit SND, Daten für Aufladung eines hier nicht weiter dargestellten Energiespeichers oder die Anmeldung eines zukünftigen Leistungsbedarfs). In die Netzknoteneinheit SND ist hier über den Schalter S3 die Versorgungseinheit SPU integriert, die die Spannung des Energiebusses EB auf die für den Element Controller EC erforderliche Eingangsspannung konvertiert.

Zudem ist eine Datenverbindung zwischen dem Schaltmodul S der Netzknoteneinheit SND und der Versorgungseinheit SPU, z.B. in Form einer serielle RS 422 oder Ethernet, vorgesehen. Energietechnisch typisch ist hier zum Beispiel eine dreiphasige Verbindung mit 400 VAC. Der Element Controller EC steuert und versorgt in Figur 2 vorliegend die Weiche W. Dabei empfängt der Element Controller EC Datentelegramme von einem übergeordneten Stellwerksrechner CPU via einer Ethernet-Verbindung von der Kommunikationseinheit SCU und gibt über diese Kommunikationseinheit SCU die Rückmeldungen an den Stellwerksrechner **R.** Der Stellwerksrechner R kann auch ein entsprechendes Auswertemodul repräsentieren, dass die empfangenen Daten bestimmungsgemäss auswertet. Alternativ ist auch möglich auf der Netzknoteneinheit SND die Rechnereinheit CPU dahingehend zu ertüchtigen, einen Grossteil der weiter **o.g.** genannten Aufgaben direkt auf der Netzknoteneinheit SND wahrnehmen zu können.

Neben der betriebssystemgestützten Rechnereinheit CPU, die beispielsweise mit einem Windows- oder Linus-Betriebssystem ausgerüstet sein kann, weist die Netzknoteneinheit SND auch eine betriebssystemlose Logikeinheit FPGA, die beispielsweise als ein hardwaremässig codierts FPGA-Modul ausgestaltet sein, auf. Dieser Logikeinheit FPGA kommt beispielsweise beim Aufstarten des Energiebusses EB eine besondere Rolle zu. Einmal angenommen, dass die Netzknoteneinheit SND noch eine weitere Anzahl auf dem linken Ast EB1 benachbart angeordnete und dabei perlenkettenartig aufgereihte Netzknoteneinheiten aufweist, kann beispielsweise bei einem Aufstarten des Energiebusses EB die Anforderung bestehen, dass zehn und mehr Netzknoteneinheiten in Betrieb zu nehmen sind. Da die Rechnereinheit CPU die Steuerung des Schaltmoduls S erst dann ausführen kann, wenn das Betriebssystem hochgefahren ist und die Dienstprogramme entsprechend gestartet sind und dann ausgeführt werden, dauert es beispielsweise bei einer Energieversorgung nur über den rechten Ast EB2 pro Netzknoteneinheit SND etwa ein bis zwei Minuten bis die Rechnereinheit CPU die Steuerung des Schaltmoduls D übernimmt. Während die Aufstartphase arbeitet aber die Logikeinheit FPGA eine elementare Prüfung des Energiebusses EB ab, wie Spannungsmessung und Kurzschlussprüfung, und kann daher bei einer erfolgreichen Prüfung bereits nach wenigen Millisekunden den linken und den rechten Schalter S1 bzw. S2 zur Durchschalten des Energiebusses EB an die nächstliegend angeordnete Netzknoteneinheit SND aktivieren. Somit wird der Energiebus EB bei Vorliegen von ordnungsgemässen Betriebsparametern bereits für alle darin eingebundenen Netzknoteneinheiten in einer Zeit von wenigen Sekunden aktiviert und ein Hochstarten der Rechnereinheiten CPU auf allen in den Energiebus EB integrierten Netzknoteneinheiten SND kann daher weitgehend parallel erfolgen.

Ist dann die Rechnereinheit CPU voll funktionsfähig, übernimmt diese die Steuerung des Schaltmoduls S und «entmachtet» sozusagen die Logikeinheit FPGA, indem diese beispielsweise von der Rechnereinheit CPU aktiv stromlos geschaltet wird. Kommt es dann aber beispielsweise während des Betriebs zum einer Störung oder Ausfall der Rechnereinheit CPU, fällt dann auch die Stromlos-Schaltung der Logikeinheit FPGA aus und diese übernimmt dann wieder mit ihren rudimentären Überwachungsfunktion die Steuerung zumindest des linken und des rechten Schalters S1 bzw. S2 des Schaltmoduls **S.**

Somit steht die Überwachungslogik für den Energiebus EB quasi mit dem Vorliegen der Bussspannung zur Verfügung und die Durchschaltung der Busspannung zu den weiteren Netzknoteneinheiten SND kann sehr schnell erfolgen, weil der Startvorgang des Aufstarts der Logikfunktionen der Netzknoteneinheit in zwei Stufen aufgeteilt ist, die unabhängig voneinander ablaufen. Mit dem Start der Logikeinheit FPGA wird in der ersten Stufe auf der Logikeinheit FPGA gleichzeitig auch die Überwachungslogik für den Energiebus EB aufgestartet. Mit der Verwendung des Ausdrucks «betriebssystemlose Logikeinheit» soll zum Ausdruck gebracht werden, dass die Logikeinheit FPGA unabhängig von jeglicher Kommunikation mit dem Prozessor der Rechnereinheit CPU und auch ohne eine Kommunikation mit den benachbarten Netzknoteneinheiten SND funktioniert. Sobald die Logikeinheit aufgestartet ist und die von ihr ausgeführte elementare Prüfung des Energiebusses EB erfolgreich abgeschlossen worden ist, kann der Energiebus EB zur nächstliegend angeordneten Netzknoteneinheit SND durchgeschaltet werden. Damit kann die Zeitdauer, die eine Netzknoteneinheit SND zum Durchschalten des Energiebusses EB auf rund eine Sekunde begrenzt werden. Selbst bei einer zweistelligen Anzahl von an dem Energiebus EB angeschalteten Netzknoteneinheiten SND kann damit innerhalb einer der Anzahl von Netzknoteneinheiten entsprechenden Anzahl von Sekunden der gesamte Energiebus hochgefahren und die entsprechend angeschlossenen Element Controller E gespiesen werden. Die zweite Stufe des Aufstartens der Rechnereinheit CPU läuft dazu parallel und startet das Betriebssystem auf dem Prozessor, was nun mehr im Bezug auf eine schnelle Verfügbarkeit des Energiebusses ein nicht mehr zeitkritischer Vorgang ist.

## Patentansprüche

1. System (Sys) zum kontrollierten Schnellstart und Betrieb eines zur ausfallsicheren Versorgung eines elektrischen Verbrauchers (E) vorgesehenen redundant ausgeführten Energiebusses (EB), über den in einer industriellen Anlage, insbesondere einer bahntechnischen Anlage, angeordnete dezentrale als elektrische Verbraucher charakterisierbare Funktionseinheiten (E, **S, W,** Bue, AC) mit elektrischer Energie versorgbar sind, wobei:
a) eine Anzahl von Netzknoteneinheiten (SND) sequentiell zwischen zwei Speisepunkten (PS1, PS2) eines ringartig aufgebauten Energiebusses (EB) angeordnet sind, die den dezentralen Funktionseinheiten (E) den Zugang zu dem Energiebus (EB) und optional auch zu einem Datenbus (CB) bereitstellen,
b) mindestens eine erste dieser Anzahl von Netzknoteneinheiten (SND) über ein steuerbares Schaltmodul (S) verfügt, das einen ersten Schalter (S1), einen zweiten Schalter (S2) und einen dritten Schalter (S3) umfasst, wobei mit dem ersten und dem zweiten Schalter (S1, S2) ein elektrischer Versorgungszugang zu den beiden Speisepunkten (PS1, PS2) und mit dem dritten Schalter (S3) ein elektrischer Versorgungszugang zu der dezentralen Funktionseinheit (E) schaltbar ist,
**dadurch gekennzeichnet, dass**
c) diese erste dieser Anzahl von Netzknoteneinheiten (SND) eine betriebssystemgestützte Rechnereinheit (CPU) und eine betriebssystemlose Logikeinheit (FPGA) aufweist,
d) die betriebssystemlose Logikeinheit (FPGA) ertüchtigt ist, während des Aufstartens der betriebssystemgestützten Rechnereinheit (CPU) und/oder während einer Betriebsstörung der betriebssystemgestützten Rechnereinheit (CPU) eine elementare Prüfung des Energiebusses (EB) und eine Steuerung zumindest des ersten und des zweiten Schalters (S1, S2) in Abhängigkeit von dem Ergebnis der elementaren Prüfung des Energiebusses (EB) vorzunehmen, und
e) die betriebssystemgestützte Rechnereinheit (CPU) ertüchtigt ist, nach einem erfolgreichen Aufstarten und/oder bei einer ordnungsgemässen Funktion ihres Dienstprogramms die erste, zweite und dritte Schalter (S1 bis S3) anstelle der betriebssystemlosen Logikeinheit (FPGA) steuert.

2. System nach Anspruch 1,
**dadurch gekennzeichnet, dass**
die betriebssystemlose Logikeinheit (FPGA) ertüchtigt ist, nach erfolgreichem Abschluss der elementaren Prüfung des Energiebusses (EB) die Spannung des Energiebusses zu der im Energiebus nächstliegend angeordneten Netzknoteneinheit (SND) durchzuschalten.

3. System nach Anspruch 1 oder **2,**
**dadurch gekennzeichnet, dass**
die elementare Prüfung des Energiebusses eine Prüfung der an der Netzknoteneinheit anliegenden Spannung und/oder eine Prüfung auf Fehlerströme, wie **z.B.** einen Kurzschlussstrom, umfasst.

4. System nach einem der Ansprüche 1 bis 3,
**dadurch gekennzeichnet, dass**
die betriebssystemgestützte Rechnereinheit (CPU) ertüchtigt ist, nach einem erfolgreichen Aufstarten und/oder bei einer ordnungsgemässen Funktion ihres Dienstprogramms die betriebssystemlose Logikeinheit von ihrer Energieversorgung zu trennen.

## Claims

1. System (Sys) for the controlled quick start and operation of a redundantly designed power bus (EB) provided for fail-safe supply of an electrical consumer (E), via which decentral functional units (E, S, W, Bue, AC), which are arranged in an industrial installation, in particular a railway engineering installation, and can be characterised as electrical consumers, can be supplied with electrical energy, wherein:
a) a number of network node units (SND) are arranged sequentially between two feed points (PS1, PS2) of a power bus (EB) constructed in a ring-like manner, which provide the decentral functional units (E) with access to the power bus (EB) and optionally also to a data bus (CB),
b) at least a first of this number of network node units (SND) possesses a controllable switching module (S), which comprises a first switch (S1), a second switch (S2) and a third switch (S3), wherein an electrical supply access to the two feed points (PS1, PS2) can be switched with the first and the second switch (S1, S2) and an electrical supply access to the decentral functional unit (E) can be switched with the third switch (S3),
**characterised in that**
c) this first of this number of network node units (SND) has an operating system-supported computer unit (CPU) and a logic unit (FPGA) without an operating system,
d) the logic unit (FPGA) without an operating system is trained to carry out a basic check of the power bus (EB) and a control of at least the first and the second switch (S1, S2) as a function of the result of the basic check of the power bus (EB) during the startup of the operating system-supported computer unit (CPU) and/or during an operational disruption of the operating system-supported computer unit (CPU), and
e) the operating system-supported computer unit (CPU) is trained to control the first, second and third switches (S1 to S3), instead of the logic unit (FPGA) without an operating system, after a successful startup and/or during proper function of its utility program.

2. System according to claim 1,
**characterised in that**
the logic unit (FPGA) without an operating system is trained to interconnect the voltage of the power bus to the network node unit (SND) arranged next in the power bus after successful completion of the basic check of the power bus (EB).

3. System according to claim 1 or 2,
**characterised in that**
the basic check of the power bus comprises a check of the voltage applied to the network node unit and/or a check for fault currents, such as a short-circuit current for example.

4. System according to one of claims 1 to 3,
**characterised in that**
the operating system-supported computer unit (CPU) is trained to disconnect the logic unit without an operating system from its power supply after a successful startup and/or during proper function of its utility program.

## Revendications

1. Système (Sys) de démarrage rapide commandé et de fonctionnement d'un bus à énergie (EB) redondant destiné à l'alimentation à sécurité intégrée d'un consommateur électrique (E), par le biais duquel des unités fonctionnelles (E, S, W, Bue, AC) décentralisées disposées dans une installation industrielle, en particulier une installation de technique ferroviaire, et pouvant être caractérisées de consommateurs électriques, peuvent être alimentées en énergie électrique, dans lequel :
a) un nombre d'unités de nœud de réseau (SND) sont disposées de manière séquentielle entre deux points d'alimentation (PS1, PS2) d'un bus à énergie (EB) monté en anneau qui fournissent aux unités fonctionnelles (E) décentralisées l'accès au bus à énergie (EB) et en option à un bus de données (CB),
b) au moins une première de ce nombre d'unités de nœud de réseau (SND) dispose d'un module de commutation (S) pouvant être commandé qui comprend un premier commutateur (S1), un deuxième commutateur (S2) et un troisième commutateur (S3), dans lequel un accès à l'alimentation électrique aux deux points d'alimentation (PS1, PS2) peut être commuté avec le premier et le deuxième commutateur (S1, S2), et un accès à l'alimentation électrique à l'unité fonctionnelle décentralisée (E) peut être commuté avec le troisième commutateur (S3), **caractérisé en ce que**
c) cette première de ce nombre d'unités de nœud de réseau (SND) présente une unité de calcul sur système d'exploitation (CPU) et une unité logique (FPGA) sans système d'exploitation,
d) l'unité logique (FPGA) sans système d'exploitation est entraînée pour, pendant le démarrage de l'unité de calcul sur système d'exploitation (CPU) et/ou pendant un dysfonctionnement de l'unité de calcul sur système d'exploitation (CPU), effectuer un contrôle élémentaire du bus à énergie (EB) et une commande d'au moins le premier et le deuxième commutateur (S1, S2) en fonction du résultat du contrôle élémentaire du bus à énergie (EB), et
e) l'unité de calcul sur système d'exploitation (CPU) est entraînée pour, après un démarrage réussi et/ou en cas de fonctionnement correct de son programme utilitaire, commander les premier, deuxième et troisième commutateur (S1 à S3) à la place de l'unité logique (FPGA) sans système d'exploitation.

2. Système selon la revendication 1, **caractérisé en ce que** l'unité logique (FPGA) sans système d'exploitation est entraînée pour, après conclusion réussie du contrôle élémentaire du bus à énergie (EB), commuter la tension du bus à énergie vers l'unité de nœud de réseau (SND) disposée au plus près dans le bus à énergie.

3. Système selon la revendication 1 ou 2, **caractérisé en ce que** le contrôle élémentaire du bus à énergie comprend un contrôle de la tension présente sur l'unité de nœud de réseau et/ou un contrôle de la présence ou non de courants de défaut comme un courant de court-circuit.

4. Système selon l'une des revendications 1 à 3,
**caractérisé en ce que** l'unité de calcul sur système d'exploitation (CPU) est entraînée pour, après un démarrage réussi et/ou en cas de fonctionnement correct de son programme utilitaire, séparer l'unité logique sans système d'exploitation de son alimentation d'énergie.
